# EUROPEAN PATENT APPLICATION

(11) **EP 4 843 991 A1**
(43) Date of publication of application: **25.11.2026**
(21) Application number: 25212319.5
(22) Date of filing: 30.10.2025
(51) Int. Cl.: C07F 5/02, C07B 59/00, C07D 247/02

(54) **FLUORINE-CONTAINING PHARMACEUTICALS SYNTHESIS METHOD AND SYSTEM**

(30) Priority: 20.05.2025 TW 114118789
(71) Applicant: Heron Neutron Medical Corp., Zhubei City, Hsinchu County (TW)
(72) Inventor: YU, Yu-Hou, Zhubei City (TW); CHO, Ping-Chuan, Zhubei City (TW); WU, Chun-Yi, Zhubei City (TW); CHANG, Ting-Yu, Zhubei City (TW)
(74) Representative: Patentship Patentanwaltsgesellschaft mbH

(57) **Abstract**

A method and system for manufacturing a fluorine-containing pharmaceutical is provided. The method for manufacturing the fluorine-containing pharmaceutical includes steps of subjecting an aromatic ring precursor containing at least one pinacol borate to an ¹⁸F fluorination reaction to obtain an intermediate; and subjecting the intermediate to a hydrolysis reaction to obtain a fluorine-containing pharmaceutical product. The aromatic ring precursor has the structure shown in formula (I):

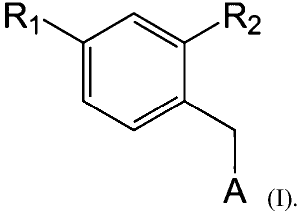

## Description

### TECHNICAL FIELD

The present disclosure relates to the field of pharmaceutical manufacturing, and, in particular, it relates to a method of fluorine-containing pharmaceuticals manufacture and a synthesis system thereof.

### BACKGROUND

Boron Neutron Capture Therapy (BNCT) is a type of intracellular targeted radiotherapy for cancer cells that combines the technic of boron-containing pharmaceuticals and radiation treatment. In Boron Neutron Capture Therapy, tumor cells are killed through the irradiation of a tumor region with a neutron beam after the tumor cells selective uptake the boron-containing pharmaceuticals. Additionally, a fluorine-containing pharmaceutical (2-[¹⁸F]fluoro-4-borono-L-phenylalanine) is used as a tracer in positron emission tomography to monitor distribution of the fluorine-containing pharmaceutical in tumors, normal tissues adjacent to the tumors, ,normal organs and normal tissues within thermal neutron irradiation range.

Currently, fluorine-containing pharmaceuticals are primarily synthesized via electrophilic substitution reactions. However, the fluorine-containing pharmaceuticals prepared by the electrophilic substitution reactions results in poor activity (ranging from 440 to 1200 MBq), radiochemical yield (nearly 1%), and specific activity (ranging from 20 to 130 MBq/µmol only) with time-consuming and inefficient synthesis process. Furthermore, cyclotron facilities are rarely equipped with gas targets required for such reactions. Accordingly, due to the aforementioned considerations, there exists a pressing industrial demand for a method and corresponding synthesis system for fluorine-containing drugs that enables higher yield, higher specific activity, and carrier-free production and without the addition of a carrier.

### BRIEF SUMMARY

Accordingly, the embodiment of the present disclosure provides a method for manufacturing a fluorine-containing pharmaceutical, including the following steps: subjecting an aromatic ring precursor containing at least one pinacol borate to an 18F fluorination reaction to obtain an intermediate; and subjecting the intermediate to a hydrolysis reaction to obtain a fluorine-containing pharmaceutical product. The aromatic ring precursor has the structure shown as the formula (I) below:

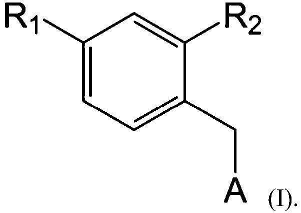

In an embodiment of the present disclosure, the ¹⁸F fluorination reaction comprises a step of reacting the aromatic ring precursor with K ¹⁸F in the presence of a first catalyst to replace R₂ on the aromatic ring precursor with ¹⁸F.

In an embodiment of the present disclosure, the ¹⁸F fluorination reaction is carried out at a temperature of 100 to 120°C for a duration of 5 to 60 minutes.

In an embodiment of the present disclosure, the first catalyst is selected from Cu(OTf)₂, Cu(OMs)₂(Py)₄, Cu(ONf)₂, Cu(OTf)₂(Py)₄, Cu(MeCN)₄OTf, or a combination thereof.

As used herein, OTf refers to trifluoromethanesulfonate, with the chemical formula -CF₃SO₃⁻, OMs refers to methanesulfonate, with the chemical formula -SO₃CH₃; Py refers to pyridine, and MeCN refers to acetonitrile or methyl cyanide. Further, Cu(ONf)₂ is synthesized from NfOH (CAS No. 375-73-5) and copper oxide (CuO).

In an embodiment of the present disclosure, the intermediate comprises a first intermediate and a second intermediate, the first intermediate is obtained by subjecting the aromatic ring precursor containing at least one pinacol borate to the ¹⁸F fluorination reaction, the method further comprises a step of reacting the first intermediate with the at least one pinacol borate in the presence of a second catalyst to generate the second intermediate, and the hydrolysis reaction is performed to hydrolyze the second intermediate to obtain the fluorine-containing pharmaceutical product.

In an embodiment of the present disclosure, the second catalyst is selected from Pd(dba)₂, Pd(PPh3)₄, Pd(dppf)Cl₂, or a combination thereof.

In an embodiment of the present disclosure, the hydrolysis reaction comprises a step of reacting the intermediate with an acidic compound at a temperature ranging from 130 to 200°C for 5 to 60 minutes.

In an embodiment of the present disclosure, the acidic compound is selected from hydrogen chloride, hydrogen bromide, hydrogen iodide, or a combination thereof.

In an embodiment of the present disclosure, the method further comprises a step of purifying the fluorine-containing pharmaceutical product.

In an embodiment of the present disclosure, the step of purifying is performed by high-performance liquid chromatography at a flow rate ranging from 3 to 6 mL/min and a pressure ranging from 1000 to 1500 psi for 20 to 70 minutes.

In an embodiment of the present disclosure, R₁ is -Cl, -Br, -I, -OSO₂CF₃, -B(OH)₂, or 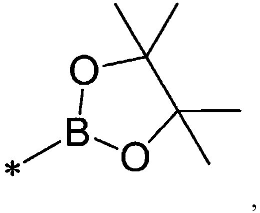 R₂ is -F, -¹⁸F, -Cl, -Br, -I, -SnMe₃, -SnBu₃, -B(OH)₂, or 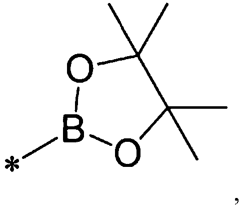 and A is a chiral auxiliary; wherein the intermediate has a structure shown as the formula (II) below: 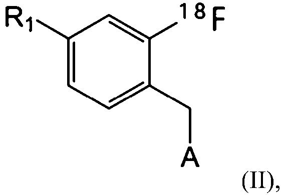 wherein the fluorine-containing pharmaceutical product has a structure shown as the formula (III) below:

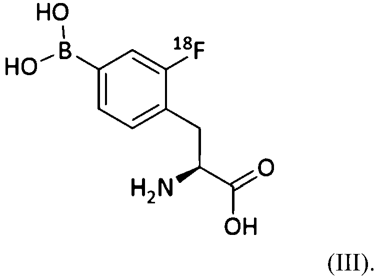

In an embodiment of the present disclosure, A is 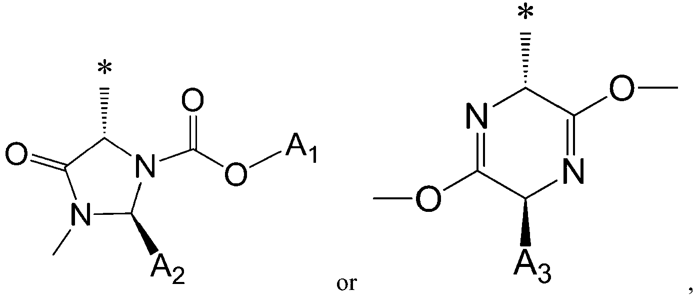 A₁ is a C₁-C₈ alkyl group, a C₇-C₁₀ aralkyl group, or a phenyl group, A₂ is a C₁-C₈ alkyl group, and A₃ is a C₁-C₈ alkyl group.

In an embodiment of the present disclosure, A is an imidazolidinone chiral auxiliary or a bis-lactim ether chiral auxiliary.

In an embodiment of the present disclosure, the aromatic ring precursor has a structure shown as the formula (IV), formula (V), formula (VI), formula (VII), formula (VIII), formula (IX), formula (X), or formula (XI) below:

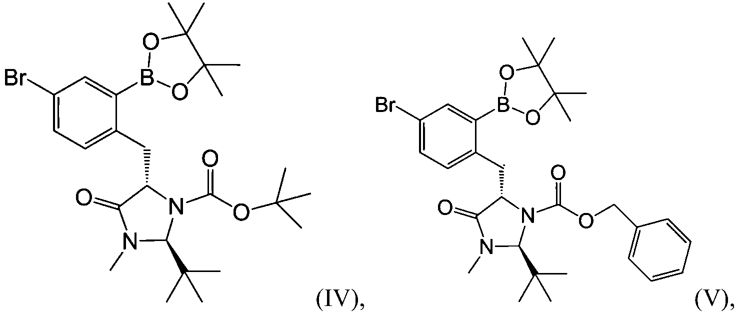

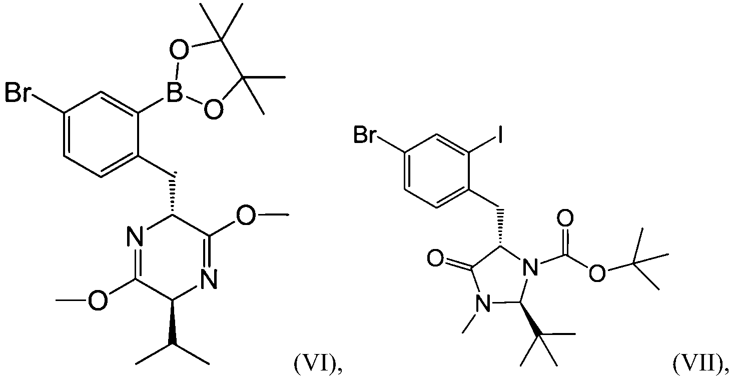

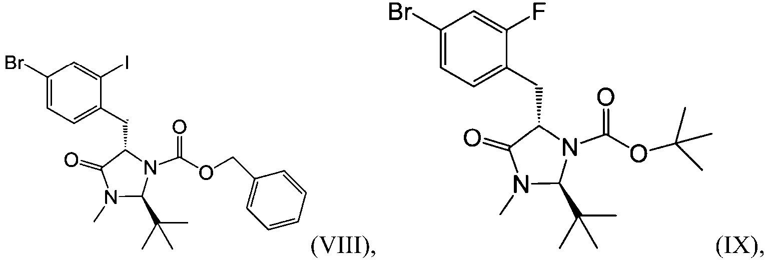

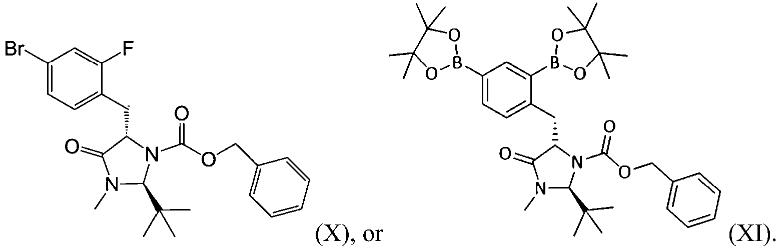

Accordingly, an embodiment of the present disclosure provides a system for manufacturing a fluorine-containing pharmaceutical, including a fluorination module configured to perform an ¹⁸F fluorination reaction on an aromatic ring precursor containing at least one pinacol borate to obtain an intermediate; and a hydrolysis module connected to the fluorination module and configured to perform a hydrolysis reaction on the intermediate to obtain a fluorine-containing pharmaceutical product, wherein the aromatic ring precursor has the structure shown as the formula (I) below:

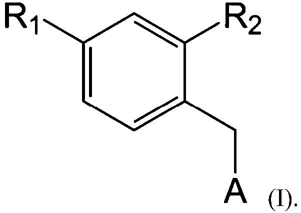

In an embodiment of the present disclosure, the fluorination module comprises: a fluorination reaction unit; a reactant introducing unit configured to introduce the aromatic ring precursor into the fluorination reaction unit; a fluoride ion introducing unit configured to introduce a fluoride ion into the fluorination reaction unit; and a first catalyst unit configured to introduce the first catalyst into the fluorination reaction unit, wherein the fluorination reaction unit is configured to receive the aromatic ring precursor, the fluoride ion, and the first catalyst to perform the ¹⁸F fluorination reaction.

In an embodiment of the present disclosure, the hydrolysis module comprises: a hydrolysis reaction unit; an acid compound introducing unit, configured to introduce an acid compound into the hydrolysis reaction unit; and a heating unit, configured to heat the hydrolysis reaction unit, wherein the hydrolysis reaction unit is configured to receive the acid compound to perform the hydrolysis reaction.

In an embodiment of the present disclosure, the system further comprises a purification module connected to the hydrolysis module, wherein the purification module is configured to purify the fluorine-containing pharmaceutical product.

In an embodiment of the present disclosure, the intermediate comprises a first intermediate and a second intermediate, the fluorination module is configured to perform the ¹⁸F fluorination reaction on the aromatic ring precursor to obtain the first intermediate, the system further comprises a borylation module connected between the fluorination module and the hydrolysis module, and the borylation module is configured to react the first intermediate with the at least one pinacol borate in the presence of a second catalyst to generate the second intermediate; wherein the hydrolysis module is configured to perform the hydrolysis reaction on the second intermediate to obtain the fluorine-containing pharmaceutical product.

In an embodiment of the present disclosure, the borylation module comprises: a borylation reaction unit; a second catalyst unit configured to introduce the second catalyst into the borylation reaction unit; and a mixture processing unit, connected to the fluorination module and the borylation reaction unit, the mixture processing unit is configured to process a mixture from the fluorination module to obtain the first intermediate, and to introduce the first intermediate into the borylation reaction unit; wherein the borylation reaction unit is configured to receive the second catalyst and to react the first intermediate with the at least one pinacol borate in the presence of the second catalyst.

In an embodiment of the present disclosure, the fluorine-containing pharmaceutical is ¹⁸F-FBPA. The system for preparing the fluorine-containing pharmaceutical in the present disclosure may be an automated synthesis system, or a computer program control system and program formed by software and hardware alone, or in any combination.

### BRIEF DESCRIPTION OF THE DRAWINGS

The present disclosure can be more fully understood by reading the subsequent detailed description and examples with references made to the accompanying drawings, wherein:
FIG. 1 is a flow chart of a method for preparing a fluorine-containing pharmaceutical according to an embodiment of the present disclosure;
FIG. 2 is a flow chart of a method for preparing a fluorine-containing pharmaceutical according to another embodiment of the present disclosure;
FIG. 3 is a block diagram of a system for preparing a fluorine-containing pharmaceutical according to an embodiment of the present disclosure; and
FIG. 4 is a block diagram of a system for preparing a fluorine-containing pharmaceutical according to another embodiment of the present disclosure.

### DETAILED DESCRIPTION

The following disclosure provides various embodiments for implementing different features of the present disclosure. It should be understood that, although the embodiments discussed herein are described with steps performed in a particular order, the steps may be performed in another logically consistent order, and in other embodiments of the method, certain steps may be substituted or omitted. Additional steps may further be provided before, during, and/or after the steps described in these embodiments.

Unless otherwise defined, all terms (including technical and scientific terms) used herein have the same meaning as recognized by persons of ordinary skill in the art. It is understood that such terms, as defined in commonly used dictionaries, should be interpreted in a manner consistent with the meaning used in the relevant technical field and in the context of the present disclosure, and not in a strictly literal or idealized sense, unless explicitly defined otherwise in the embodiments of the present disclosure. Furthermore, it should be noted that, although the fluorination reaction described in the present disclosure is primarily illustrated using [¹⁸F] fluoride ion as an example in the specification, it would be understood by those skilled in the art that fluorine has 19 known isotopes with mass numbers ranging from 13 to 31, of which only one is stable and the others are radioactive. Accordingly, those skilled in the art would recognize that [¹⁸F] may be replaced with other fluorine isotopes suitable for specific industrial applications in view of the present disclosure.

The present disclosure generally relates to a method for preparing a fluorine-containing pharmaceutical, in which an aromatic compound containing a pinacol borate is used as a precursor and subjected to an ¹⁸F nucleophilic substitution reaction. The resulting product is then purified by liquid chromatography (LC) to obtain a specific fluorine-containing pharmaceutical. According to the embodiments of the present disclosure, the liquid chromatography may be, but is not limited to, high-performance liquid chromatography (HPLC), ultra-high-performance liquid chromatography (UHPLC), preparative liquid chromatography, affinity chromatography, hydrophilic interaction liquid chromatography (HILIC), or thin-layer chromatography. Compared to conventional methods employing electrophilic substitution reactions, a nucleophilic substitution reaction is utilized in the method for preparing a fluorine-containing pharmaceutical according to the present disclosure to synthesize the fluorine-containing pharmaceutical. Compared to prior art methods that employ electrophilic substitution reactions, the present disclosure for preparing a fluorine-containing pharmaceutical mainly utilizes a nucleophilic reaction for the synthesis of fluorinated pharmaceutical compounds. This approach offers advantages such as shorter reaction time, higher yield, and higher specific activity, while also requiring fewer steps, making it particularly suitable for implementation within a fully integrated synthesis system.

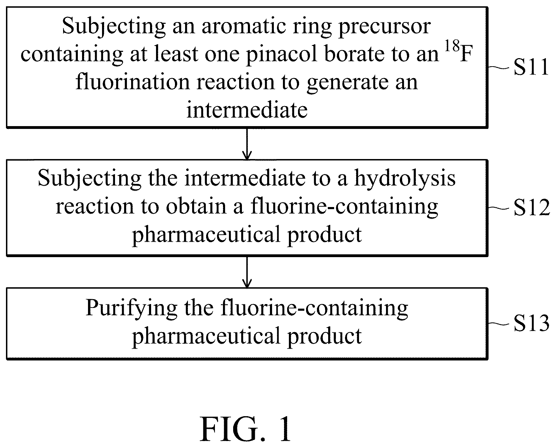

Please refer to FIG. 1 and the following reaction scheme. A method for preparing ¹⁸F-labeled 2-fluoro-4-borono-phenylalanine (FBPA) (hereinafter referred to as a fluorine-containing pharmaceutical) according to an embodiment of the present disclosure includes a step S11 of fluorination reaction, a step S12 of hydrolysis reaction, and a step S13 of purification reaction.

In the step S11 of the fluorination reaction, an aromatic ring precursor containing at least one pinacol borate (e.g., an aromatic ring precursor containing two pinacol borate) is subjected to a ¹⁸F fluorination reaction to replace pinacol borate on an aromatic ring by ¹⁸F to generate an intermediate. The aromatic ring precursor has the structure shown in formula (I):

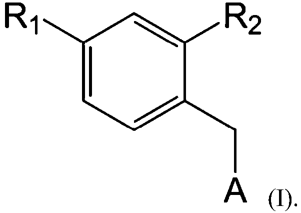

In the step S12 of the hydrolysis reaction, the intermediate is subjected to a hydrolysis reaction to obtain a fluorine-containing pharmaceutical product.

In the step S13 of the purification reaction, the fluorine-containing pharmaceutical product is purified.

The overall synthesis process as described above is illustrated by the following reaction scheme:

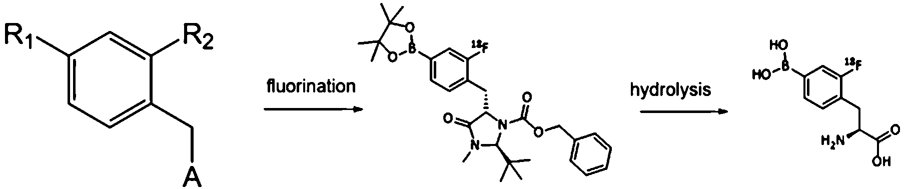

In the reaction scheme, the aromatic ring precursor is

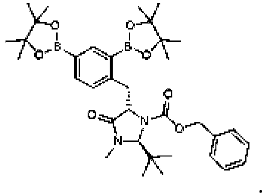

As mentioned above, it should be noted that the reaction scheme is merely one example of a specific embodiment of the method for preparing the fluorine-containing pharmaceutical of the present disclosure. The purpose of the reaction scheme is solely to more explicitly depict main steps of the method for preparing the fluorine-containing pharmaceutical of the present disclosure, and is not intended to limit the scope of the present disclosure.

The structures and synthesis processes of the compounds of the embodiment are further described below.

According to an embodiment of the present disclosure, R₁ may be -Cl, -Br, -I, - OSO₂CF₃, -B(OH)₂, or 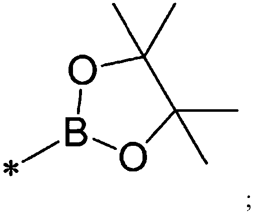 R₂ may be -F, -¹⁸F, -Cl, -Br, -I, -SnMe₃, - SnBu₃, -B(OH)₂, or 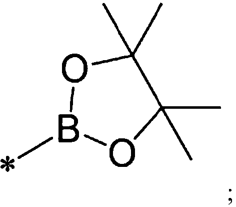 A may be a chiral auxiliary; the intermediate may have a structure as shown in the following formula (II): 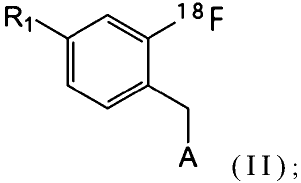 and the fluorine-containing pharmaceutical may have a structure as shown in the following formula (III):

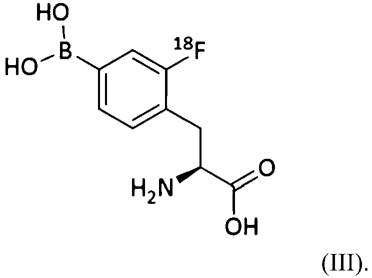

According to an embodiment of the present disclosure, A may be an imidazolidinone chiral auxiliary or a bis-lactim ether chiral auxiliary. In some embodiments, A may be 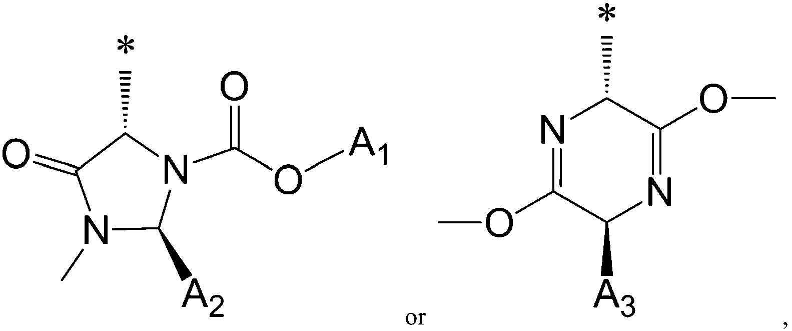 in which A₁ may be a C₁-C₈ alkyl group, a C₇-C₁₀ aralkyl group or a phenyl group, A₂ may be a C₁-C₈ alkyl group, and A3 may be a C₁-C₈ alkyl group. The C₁-C₈ alkyl group is, for example, a methyl group, ethyl group, n-propyl group, isopropyl group, n-butyl group, sec-butyl group, isobutyl, tert-butyl group, n-pentyl group, or isopentyl group. The term "aralkyl" refers to an alkyl group in which at least one hydrogen atom is replaced by a phenyl group. The C₇-C₁₀ aralkyl group is, for example, a C₁-C₄ alkyl group in which one hydrogen atom is replaced by a phenyl group. In some embodiments, A may be 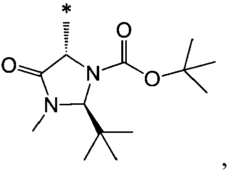 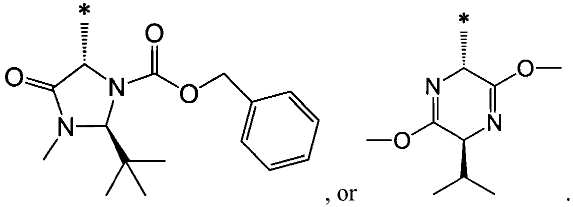 Therefore, a chiral auxiliary-based precursor of a fluorine-containing pharmaceutical (i.e., the intermediate) could be obtained by employing a chiral auxiliary with a specific structure, allowing the fluorine-containing pharmaceutical to be prepared through a simplified process.

Optionally, the aromatic ring precursor may have a structure as shown in formula (IV), formula (V), formula (VI), formula (VII), formula (VIII), formula (IX), formula (X), or formula (XI):

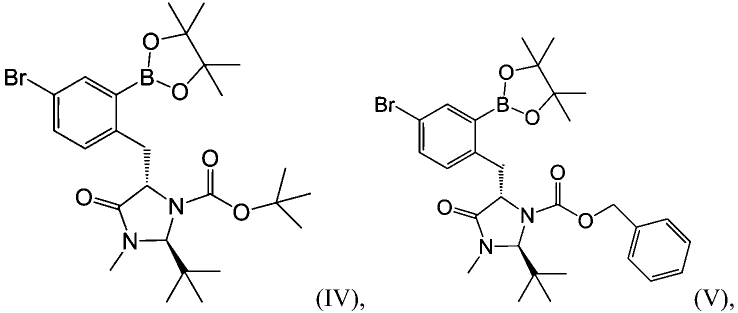

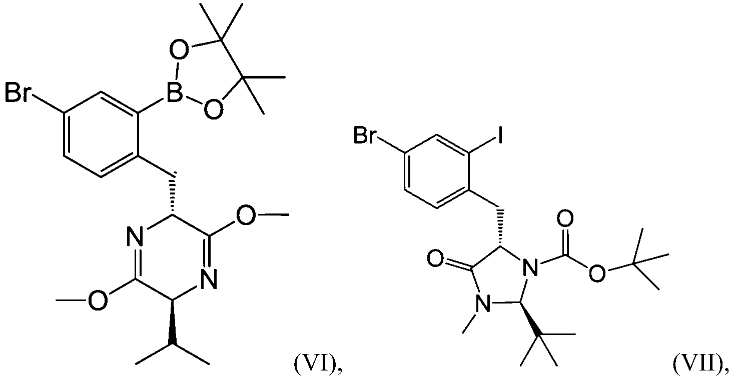

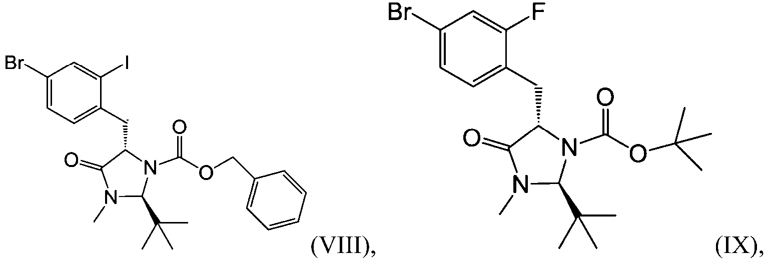

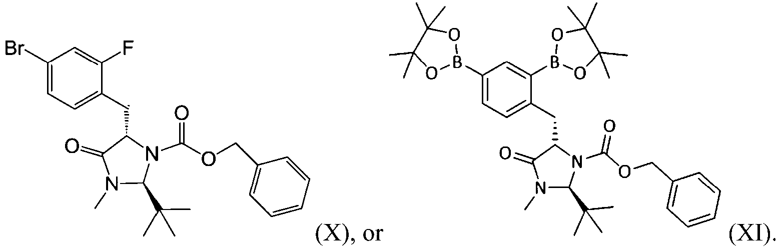

Specifically, the fluorination reaction includes reacting the aromatic ring precursor with K¹⁸F in the presence of a first catalyst to replace R₂ on the aromatic ring precursor with ¹⁸F. In one embodiment, the fluorination reaction may be carried out at a temperature of 100 to 120° C. (e.g., 100, 105, 110, 115, or 120° C.), with a reaction time of 5 to 60 minutes (e.g., 5, 10, 20, 30, 40, 50, or 60 minutes). The first catalyst may be a copper catalyst and is selected from Cu(OTf)₂, Cu(OMs)₂(Py)₄, Cu(ONf)₂, Cu(OTf)₂(Py)₄, Cu(MeCN)₄OTf, or a combination thereof. In the present disclosure, OTf refers to trifluoromethanesulfonate, with a chemical formula "CF₃SO₃⁻"; OMs refers to methanesulfonate, with a chemical formula "SO₃CH₃"; Py refers to pyridine; MeCN refers to acetonitrile or methyl cyanide; and Cu(ONf)₂ is synthesized from NfOH (CAS No. 375-73-5) and copper(II) oxide (CuO), wherein the fluorination reaction catalyzed by a copper catalyst is referred to as a copper-mediated aromatic ring fluorination reaction. In one embodiment of the present disclosure, K¹⁸F may be obtained through the following process: H₂¹⁸O is irradiated with accelerated protons to induce a ¹⁸O(p,n)¹⁸F reaction, thereby generating a [¹⁸F]F⁻ solution. The resulting solution is then passed through an anion exchange cartridge, by which the [¹⁸F]F⁻ is adsorbed onto the cartridge and separated from the unadsorbed H₂¹⁸O. Subsequently, [¹⁸F]F⁻ is eluted from the cartridge using a washing solution, thereby obtaining a K¹⁸F solution suitable for use in a radiolabeling reaction.

Specifically, the hydrolysis reaction includes reacting the intermediate with an acidic compound at a temperature ranging from 130 to 200° C. (e.g., 130, 140, 150, 160, 170, 180, 190, or 200° C) for 5 to 60 minutes (e.g., 5, 10, 20, 30, 40, 50, or 60 minutes). The acidic compound may be selected from hydrogen chloride, hydrogen bromide, hydrogen iodide, or a combination thereof to hydrolyze pinacol borate group ( 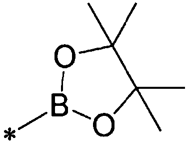 ) of the intermediate to -B(OH)₂. In addition, the acid may also hydrolyze the chiral auxiliary A of the intermediate into an amino acid group.

Specifically, in one embodiment of the present disclosure, the purification method may be performed by high performance liquid chromatography (HPLC) for 20 to 70 minutes, with a flow rate of be 3 to 6 mL/min and a pressure of1000 to 1500 psi.

When R₁ of the aromatic ring precursor is not the pinacol borate group, the aromatic ring precursor must be subjected to a borylation reaction during the synthesis process, in which R₁ on the aromatic ring precursor is replaced by a pinacol borate group, as shown in the following reaction scheme:

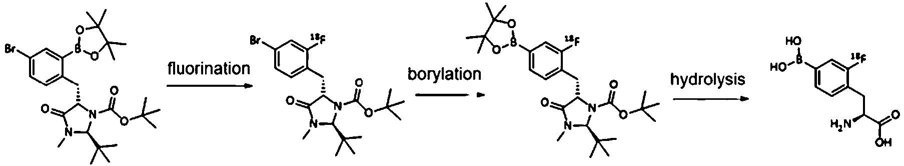

It should be noted that the reaction scheme is merely one example of a specific embodiment of the method for preparing the fluorine-containing pharmaceutical of the present disclosure. For example, the aromatic ring precursor Br (i.e., R₁) in the example may further be -Cl, -SnMe₃, -SnBu₃ as mentioned in the previous embodiment.

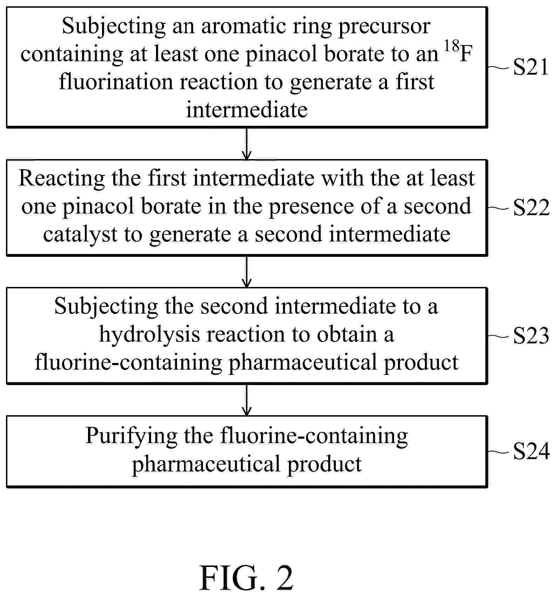

In another embodiment of the present disclosure, the overall synthesis process is described in detail with reference to FIG. 2.

Please, refer to FIG. 2. A method for preparing a fluorine-containing pharmaceutical according to another embodiment of the present disclosure includes: a step S21 of an ¹⁸F fluorination reaction, a step S22 of a borylation reaction, a step S23 of a hydrolysis reaction, and a step S24 of purification reaction. The ¹⁸F fluorination reaction, the hydrolysis reaction and the purification reaction are the same as those described in the method of FIG. 1 and the details are not repeated herein. The respective steps may be applied interchangeably between theses embodiments.

In the step S21 of the ¹⁸F fluorination reaction, an aromatic ring precursor containing at least one pinacol borate (e.g., an aromatic ring precursor containing one pinacol borate) is subjected to the ¹⁸F fluorination reaction to replace the pinacol borate on the aromatic ring with ¹⁸F, so as to generate a first intermediate.

In the step S22 of the borylation reaction, the first intermediate is reacted with at least one pinacol borate (e.g., bis(pinacolato)diboron ((Bpin)₂)) in the presence of a second catalyst to replace Br on the aromatic ring with pinacol borate, so as to generate a second intermediate.

In the step S23 of the hydrolysis reaction, the second intermediate is subjected to a hydrolysis reaction to obtain a fluorine-containing pharmaceutical product.

In the step S24 of the purification reaction, the fluorine-containing pharmaceutical product is purified.

According to embodiments of the present disclosure, the second catalyst may be selected from palladium catalysts including bis(dibenzylideneacetone)palladium (Pd(dba)₂), tetrakis(triphenylphosphine)palladium ((Pd[P(C₆H₅)₃]₄), Pd(PPh3)₄), and (1,1'-Bis(diphenylphosphino)ferrocene)palladium(II) dichloride (Pd(dppf)Cl₂), or a combination thereof. The first intermediate is reacted with bis(pinacolato)diboron ((Bpin)₂) in the presence of the palladium catalyst via a Miyaura borylation reaction, thereby replacing R₁ on the aromatic ring with pinacol borate.

The method for preparing the fluorine-containing pharmaceutical of the present disclosure may be implemented using the system for preparing a fluorine-containing pharmaceutical provided herein to perform the entire chemical synthesis process. The synthesis system may be an automated synthesis system, or a computer-program-controlled system and process configured through software, hardware, or a combination thereof. Further descriptions of the system are set forth below.

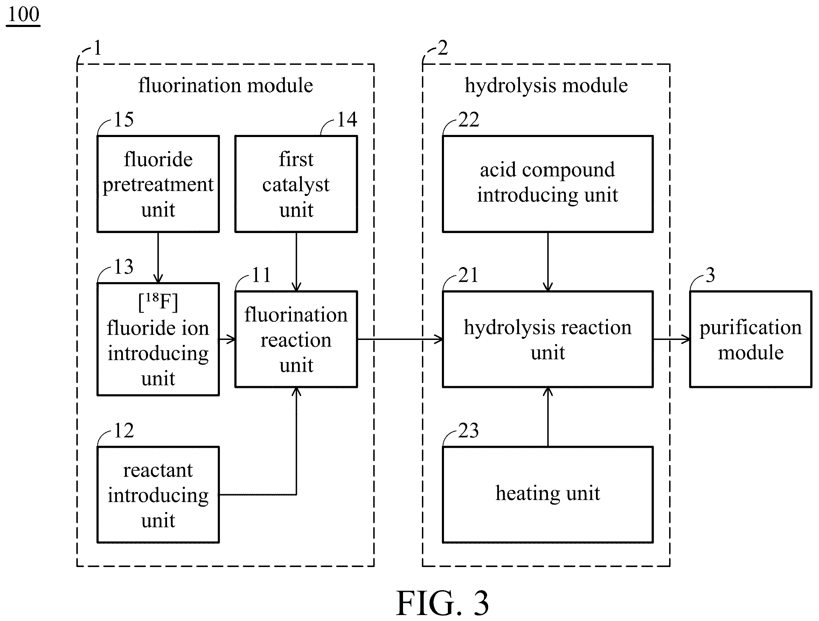

Refer to FIG. 3. A system 100 for preparing a fluorine-containing pharmaceutical according to an embodiment of the present disclosure includes: a fluorination module 1, a hydrolysis module 2, and a purification module 3.

Specifically, the hydrolysis module 2 is connected between the fluorination module 1 and the purification module 3. The fluorination module 1 is configured to perform a ¹⁸F fluorination reaction on an aromatic ring precursor containing at least one pinacol borate (the step S11) to obtain an intermediate. The hydrolysis module 2 is configured to perform a hydrolysis reaction on the intermediate (the step S12) to obtain a fluorine-containing pharmaceutical product. The purification module 3 is configured to purify the fluorine-containing pharmaceutical product (the step S13).

According to an embodiment of the present disclosure, the fluorination module 1 may include a fluorination reaction unit 11, a reactant introducing unit 12, a [¹⁸F] fluoride ion introducing unit 13, a first catalyst unit 14, and a [¹⁸F] fluoride pretreatment unit 15.

The reactant introducing unit 12, the [¹⁸F] fluoride ion introducing unit 13, and the first catalyst unit 14 are respectively connected to the fluorination reaction unit 11, and the [¹⁸F] fluoride pretreatment unit 15 is connected to the [¹⁸F] fluoride ion introducing unit 13. The reactant introducing unit 12 is configured to introduce an aromatic ring precursor containing at least one pinacol borate into the fluorination reaction unit 11. The [¹⁸F] fluoride ion introducing unit 13 is configured to introduce a [¹⁸F] fluoride ion into the fluorination reaction unit 11. The first catalyst unit 14 is configured to introduce a first catalyst (e.g., one or more of Cu(OTf)₂, Cu(OMs)₂(Py)₄, Cu(ONf)₂, Cu(OTf)₂(Py)₄, and Cu(MeCN)₄Otf) into the fluorination reaction unit 11. Specifically, the [¹⁸F] fluoride pretreatment unit 15 is configured to irradiate H₂¹⁸O with an accelerated proton, and to generate a [¹⁸F]F⁻ solution by using a ¹⁸O(p,n)¹⁸F reaction. The solution is then treated by an anion exchange cartridge, by which [¹⁸F]F⁻ is adsorbed onto the cartridge and separated from H₂¹⁸O that is not adsorbed onto the cartridge. Subsequently, [¹⁸F]F⁻ is eluted from the cartridge using a washing solution, thereby obtaining a K¹⁸F solution suitable for use in a radiolabeling reaction. The fluorination reaction unit 11 is configured to perform ¹⁸F fluorination reaction on an aromatic ring precursor containing at least one pinacol borate to obtain an intermediate.

According to an embodiment of the present disclosure, the hydrolysis module 2 may include a hydrolysis reaction unit 21, an acid compound introducing unit 22, and a heating unit 23.

The acidic compound introducing unit 22 and the heating unit 23 are respectively connected to the hydrolysis reaction unit 21. The acidic compound injection unit 22 is configured to introduce an acidic compound (for example, hydrogen chloride, hydrogen bromide, or hydrogen iodide) into the hydrolysis reaction unit 21. The heating unit 23 is configured to heat the hydrolysis reaction unit 21 to 130 to 200°C. The hydrolysis reaction unit 21 is configured to hydrolyze the intermediate to obtain a fluorine-containing pharmaceutical product.

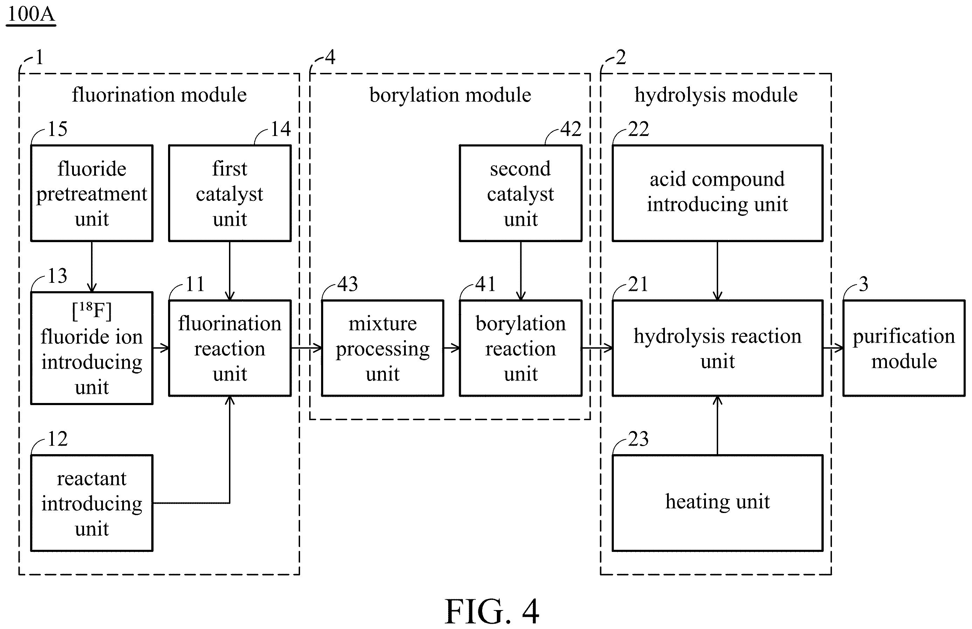

Please refer to FIG. 4. A system 100A for preparing a fluorine-containing pharmaceutical according to another embodiment of the present disclosure includes the same fluorination module 1, hydrolysis module 2, and purification module 3 as the system 100 for preparing a fluorine-containing pharmaceutical in the aforementioned embodiment, and the system 100A further includes a borylation module 4. A detailed description of the borylation module 4 and the differences between the two embodiments is provided below, while the common features will not be repeated.

Specifically, the borylation module 4 is connected between the fluorination module 1 and the hydrolysis module 2, and the hydrolysis module 2 is connected to the purification module 3. The fluorination module 1 is configured to perform a ¹⁸F fluorination reaction on an aromatic ring precursor containing at least one pinacol borate (the step S21) to obtain a first intermediate. The borylation module 4 is configured to react the first intermediate with at least one pinacol borate in the presence of a second catalyst (the step S22) to generate a second intermediate. The hydrolysis module 2 is configured to perform a hydrolysis reaction on the second intermediate (the step S23) to obtain a fluorine-containing pharmaceutical product. The purification module 3 is configured to purify the fluorine-containing pharmaceutical product (the step S24).

In one embodiment of the present disclosure, the borylation module 4 may include a borylation reaction unit 41, a second catalyst unit 42, and a mixture processing unit 43. The second catalyst unit 42 is connected to the borylation reaction unit 41 and is configured to introduce the second catalyst into the borylation reaction unit 41. The borylation reaction unit 41 is configured to react the first intermediate with an aromatic ring precursor containing at least one pinacol borate in the presence of the second catalyst to generate a second intermediate. The mixture processing unit 43 is connected to the fluorination module 1 and the borylation reaction unit 41, and the mixture processing unit 43 is configured to process a mixture from the fluorination module 1 to obtain the first intermediate, and to introduce the first intermediate into the borylation reaction unit 41.

The following examples for synthesizing fluorine-containing pharmaceuticals are specifically described in Examples 1 to 3. Example 1 is provided to exemplarily illustrate the method for preparing the fluorine-containing pharmaceutical as shown in FIG. 1, in which a borylation reaction is not included, whereas examples 2 and 3 are provided to exemplarily illustrate the method for preparing a fluorine-containing pharmaceutical as shown in FIG. 2, in which a borylation reaction is included.

### Example 1: Preparation of fluorine-containing pharmaceutical product

Refer to the following reaction scheme. The aromatic ring precursor of the formula (11) as mentioned above was reacted with ¹⁸F to generate an intermediate; and the intermediate was reacted with an acid to generate a fluorine-containing pharmaceutical.

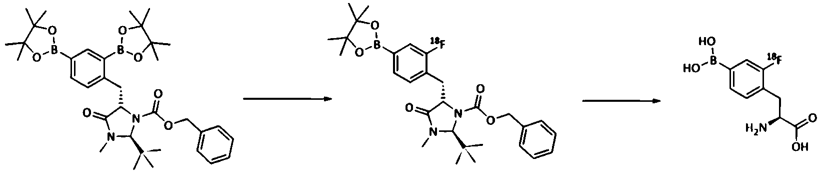

The preparation process is described in detail below.

### Radiofluorination (the step S11):

First, [¹⁸F]HF was passed through a non-polar cartridge to be adsorbed onto the cartridge. The non-polar cartridge may be, but is not limited to, C18, C8, phenyl, CN, NH₂, silica, or diol, and the process may be modified and selected according to industrial applications and production requirements.

Subsequently, the fluoride adsorbed onto the non-polar cartridge was eluted into a V-vial using an eluent containing KOTf and K₂CO₃ to obtain K¹⁸F.

The solvent in the V-vial was evaporated. Thereafter, an organic solvent was added to the V-vial to perform azeotropic evaporation, in which the organic solvent may be but is not limited to acetonitrile, methanol, isopropanol, N, N-dimethylformamide, ethyl acetate, acetone, chloroform, benzene, toluene, or a combination thereof.

An aromatic ring precursor (the formula 11) and a catalyst were added to the V-vial to form a solution of a reaction mixture. Oxygen was introduced and the reaction mixture was reacted at a high temperature for 15-30 minutes to replace the pinacol borate group on the aromatic ring with ¹⁸F, so as to obtain a ¹⁸F-precursor mixture (an intermediate). In the embodiment of the present disclosure, the high temperature may range from 90°C to 150°C, and the catalyst may be selected from the first catalyst described above according to the requirements of the process.

After ¹⁸F labeling, the ¹⁸F-precursor mixture was diluted and introduced into a non-polar cartridge, and the flow through the non-polar cartridge was collected.

### Hydrolysis (the step S12):

The solvent was evaporated, and HI was added to a reaction bottle containing the intermediate, and hydrolysis was carried out at 180°C. for 15 minutes to hydrolyze the pinacol borate group to -B(OH)₂, so as to generate a fluorine-containing pharmaceutical product.

The fluorine-containing pharmaceutical product was neutralized using NaOH.

### Purification (the step S13):

The neutralized fluorine-containing pharmaceutical product was purified by HPLC using an aqueous solution containing ethylenediaminetetraacetic acid (EDTA), sodium 1-octanesulfonate, acetic acid, and acetonitrile (ACN).

### Example 2: Preparation of fluorine-containing pharmaceutical product

Refer to the following reaction scheme. The aromatic ring precursor of the formula (4) as mentioned above was reacted with ¹⁸F in the presence of copper catalyst to generate a first intermediate. The first intermediate was reacted with bis(pinacolato)diboron ((Bpin)₂) in the presence of a palladium catalyst to produce a second intermediate. The second intermediate was then reacted with an acid to generate the fluorine-containing pharmaceutical product.

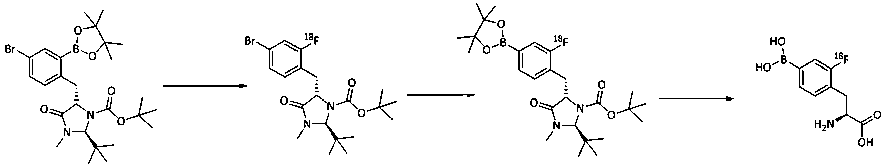

The preparation process is described in detail below.

### Radiofluorination (the step S21):

First, [¹⁸F]HF was passed through a non-polar cartridge to be adsorbed onto the cartridge.

Subsequently, the fluoride adsorbed onto the non-polar cartridge was eluted into a V-vial using an eluent containing KOTf and K₂CO₃ to obtain K¹⁸F.

The solvent in the V-vial was evaporated. Thereafter, an organic solvent was added to the V-vial to perform azeotropic evaporation, in which the organic solvent may be but is not limited to acetonitrile, methanol, isopropanol, N, N-dimethylformamide, ethyl acetate, acetone, chloroform, benzene, toluene, or a combination thereof.

An aromatic ring precursor (the formula 4) and a catalyst were added to the V-vial to form a reaction mixture. The reaction mixture was reacted at a high temperature for 15-30 minutes to replace the pinacol borate group on the aromatic ring with ¹⁸F, so as to obtain a ¹⁸F-precursor mixture, i.e., the first intermediate. In the embodiment of the present disclosure, the high temperature may range from 90°C to 150°C.

### Borylation (the step S22):

After ¹⁸F labeling, the ¹⁸F-labeled precursor mixture was diluted with ddH₂O and loaded in a non-polar cartridge. After the crude product was introduced, the non-polar cartridge was further washed with ddH₂O. The non-polar cartridge may be, but is not limited to, C18, C8, phenyl, CN, NH₂, silica, or diol, and the process may be modified and selected according to industrial applications and production requirements.

The non-polar cartridge was flushed with nitrogen and the product was eluted with MeOH.

The solvent was evaporated, and then bis(pinacolato)diboron, Pd(dppf)Cl₂, and potassium acetate were dissolved in dimethylformamide (DMF). The reaction mixture was reacted at 140°C for 30 minutes, and Br on the aromatic ring was replaced with pinacol borate to obtain a second intermediate.

### Hydrolysis (the step S23):

The second intermediate was treated with an HI solution and heated at 180°C for 15 minutes, whereby the pinacol borate was hydrolyzed to -B(OH)₂, resulting in the formation of the fluorine-containing pharmaceutical product.

The fluorine-containing pharmaceutical product was neutralized using NaOH.

### Purification (the step S24):

The neutralized fluorine-containing pharmaceutical product was purified by HPLC using an aqueous solution containing EDTA, sodium 1-octanesulfonate, acetic acid, and acetonitrile (ACN).

### Example 3: Preparation of fluorine-containing pharmaceutical product

The aromatic ring precursor of the formula (5) as mentioned above was reacted with ¹⁸F in the presence of copper catalyst to generate a first intermediate. The first intermediate was reacted with bis(pinacolato)diboron ((Bpin)₂) in the presence of a palladium catalyst to produce a second intermediate. The second intermediate was then reacted with an acid to generate the fluorine-containing pharmaceutical product, as shown in the following reaction scheme.

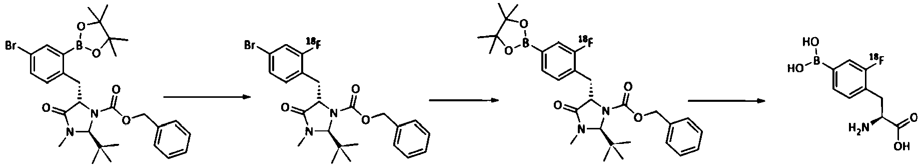

The preparation process is described in detail below.

### Radiofluorination (the step S21):

First, [¹⁸F]HF was passed through and adsorbed onto a non-polar cartridge. The non-polar cartridge may be, but is not limited to, C18, C8, phenyl, CN, NH₂, silica, or diol, and the process may be modified and selected according to industrial applications and production requirements.

Subsequently, the fluoride adsorbed onto the non-polar cartridge was eluted into a V-vial using an eluent containing KOTf and K₂CO₃ to obtain K¹⁸F.

The solvent in the V-vial was evaporated. Thereafter, an organic solvent was added to the V-vial to perform azeotropic evaporation, in which the organic solvent may be but is not limited to acetonitrile, methanol, isopropanol, N, N-dimethylformamide, ethyl acetate, acetone, chloroform, benzene, toluene, or a combination thereof.

An aromatic ring precursor (the formula 5) and a catalyst were added to the V-vial to form a solution of a reaction mixture. The reaction mixture was reacted at a high temperature for 15-30 minutes to replace the pinacol borate group on the aromatic ring with ¹⁸F, so as to obtain a ¹⁸F-precursor mixture, i.e., the first intermediate. In the embodiment of the present disclosure, the high temperature may range from 90°C to 150°C, and the catalyst may be selected from the first catalyst described above according to the requirements of the process.

### Borylation (the step S22):

After ¹⁸F labeling, the ¹⁸F-labeled precursor mixture was diluted with ddH₂O and loaded in a non-polar cartridge. The non-polar cartridge was activated by passing ethanol and ddH₂O therethrough. After the crude product was introduced, the non-polar cartridge was subsequently washed with ddH₂O.

The non-polar cartridge was flushed with nitrogen for 30 seconds and the product was eluted with MeOH.

The solvent was evaporated, and then bis(pinacolato)diboron, Pd(dppf)Cl₂, and potassium acetate were dissolved in DMF. The reaction mixture was reacted at 140°C for 30 minutes, and Br on the aromatic ring was replaced with pinacol borate to obtain a second intermediate.

### Hydrolysis (the step S23):

The second intermediate was treated with an HI solution and heated at 180°C for 15 minutes, whereby the pinacol borate was hydrolyzed to -B(OH)₂, resulting in the formation of the fluorine-containing pharmaceutical product.

The fluorine-containing pharmaceutical product was neutralized using NaOH.

### Purification (the step S24):

The neutralized fluorine-containing pharmaceutical product was purified by HPLC using an aqueous solution containing EDTA, sodium 1-octanesulfonate, acetic acid, and ACN.

As mentioned above, a decay-corrected radiochemical yield of example 1 is approximately 10.7% to 20.6%, and a radioactive specific activity is greater than 500 MBq/µmol, a decay-corrected radiochemical yield of example 2 approximately ranges from 9.3% to 22.7%, and a radioactive specific activity ranges from 300 to 500 MBq/µmol, and a decay-corrected radiochemical yield of example 3 approximately ranges 9.3% to 22.7%, and a radioactive specific activity ranges from 300 to 500 MBq/µmol. By contrast, a radiochemical yield obtained by a conventional electrophilic substitution process is approximately 1%, and a specific radioactivity approximately ranges from 20 to 130 MBq/µmol. Accordingly, the method for preparing the fluorine-containing pharmaceutical of the present disclosure possesses an improved radiochemical yield and an improved specific radioactivity. Further, the method for preparing the fluorine-containing pharmaceutical of the present disclosure involves fewer steps, allowing an entire process to be operated by a synthesis system, thereby facilitating quantitative production through a stable and safe automated synthesis procedure. Furthermore, the fluorine-containing pharmaceutical obtained by the method for preparing a fluorine-containing pharmaceutical of the present disclosure can be applied in a field of boron neutron capture therapy (BNCT) and in positron emission tomography (PET) imaging for specific types of cancer.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure. Accordingly, the scope of protection of the present disclosure shall be defined by the following appended claims. In addition, although the present disclosure has been disclosed above with reference to several preferred embodiments, such embodiments are not intended to limit the scope of the present disclosure.

Furthermore, in one or more embodiments, the features, advantages, and characteristics described herein may be combined in any suitable manner. Based on the present disclosure, those of ordinary skill in the art would recognize that the present disclosure can be practiced without one or more of the specific features or advantages of a particular embodiment. In other instances, additional features and advantages may be recognized in certain embodiments that may not be present in all embodiments of the disclosure.

## Claims

1. A method for preparing a fluorine-containing pharmaceutical, **characterized in that** the method comprises steps of:
subjecting an aromatic ring precursor containing at least one pinacol borate to an ¹⁸F fluorination reaction to obtain an intermediate; and
subjecting the intermediate to a hydrolysis reaction to obtain a fluorine-containing pharmaceutical product;
wherein the aromatic ring precursor has a structure as shown in formula (I):

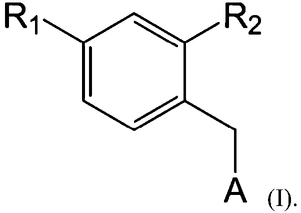

2. The method for preparing a fluorine-containing pharmaceutical of claim 1, **characterized in that** the ¹⁸F fluorination reaction comprises a step of reacting the aromatic ring precursor with K¹⁸F in the presence of a first catalyst to replace R₂ on the aromatic ring precursor with ¹⁸F.

3. The method for preparing a fluorine-containing pharmaceutical of claim 1, **characterized in that** the ¹⁸F fluorination reaction is carried out at a temperature of 100 to 120°C for a duration of 5 to 60 minutes.

4. The method for preparing a fluorine-containing pharmaceutical of claim 2, **characterized in that** the first catalyst is selected from Cu(OTf)₂, Cu(OMs)₂(Py)₄, Cu(ONf)₂, Cu(OTf)₂(Py)₄, Cu(MeCN)₄OTf, or a combination thereof.

5. The method for preparing a fluorine-containing pharmaceutical of claim 1, **characterized in that** the intermediate comprises a first intermediate and a second intermediate, the first intermediate is obtained by subjecting the aromatic ring precursor containing at least one pinacol borate to the ¹⁸F fluorination reaction, the method further comprises a step of reacting the first intermediate with the at least one pinacol borate in the presence of a second catalyst to generate the second intermediate, the hydrolysis reaction is performed to hydrolyze the second intermediate to obtain the fluorine-containing pharmaceutical product, and the second catalyst is selected from Pd(dba)₂, Pd(PPh3)₄, Pd(dppf)Cl₂, or a combination thereof.

6. The method for preparing a fluorine-containing pharmaceutical of claim 1, **characterized in that** the hydrolysis reaction comprises a step of reacting the intermediate with an acidic compound at a temperature ranging from 130 to 200°C for 5 to 60 minutes, and the acidic compound is selected from hydrogen chloride, hydrogen bromide, hydrogen iodide, or a combination thereof.

7. The method for preparing a fluorine-containing pharmaceutical of claim 1, **characterized in that** the method further comprises a step of purifying the fluorine-containing pharmaceutical product, and the step of purifying is performed by high-performance liquid chromatography at a flow rate ranging from 3 to 6 mL/min and a pressure ranging from 1000 to 1500 psi for 20 to 70 minutes.

8. The method for preparing a fluorine-containing pharmaceutical of claim 1, **characterized in that** R₁ is -Cl, -Br, -I, -OSO₂CF₃, -B(OH)₂, or 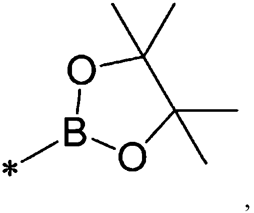 R₂ is -F, -¹⁸F, -Cl, -Br, -I, -SnMe₃, -SnBu₃, -B(OH)₂, or 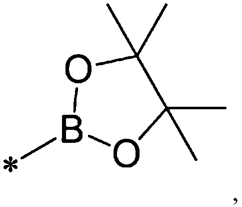 and A is a chiral auxiliary;
wherein the intermediate has a structure as shown in formula (II): 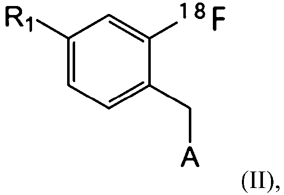 wherein the fluorine-containing pharmaceutical product has a structure as shown in formula (III):

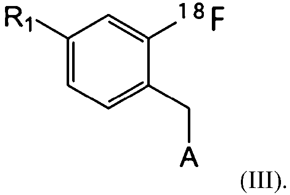

9. The method for preparing a fluorine-containing pharmaceutical of claim 1, **characterized in that** A is 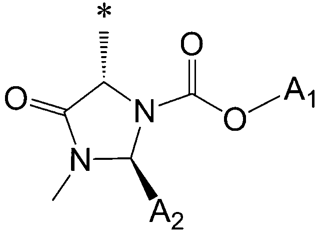 or 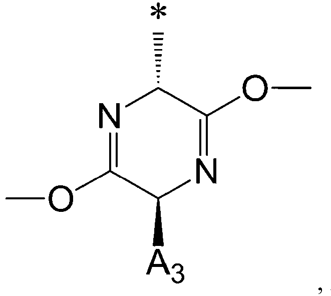 A₁ is a C₁-C₈ alkyl group, a C₇-C₁₀ aralkyl group, or a phenyl group, A₂ is a C₁-C₈ alkyl group, and A₃ is a C₁-C₈ alkyl group.

10. The method for preparing a fluorine-containing pharmaceutical of claim 1, **characterized in that** A is an imidazolidinone chiral auxiliary or a bis-lactim ether chiral auxiliary.

11. The method for preparing a fluorine-containing pharmaceutical of claim 1, **characterized in that** the aromatic ring precursor has a structure as shown in formula (IV), formula (V), formula (VI), formula (VII), formula (VIII), formula (IX), formula (X), or formula (XI):

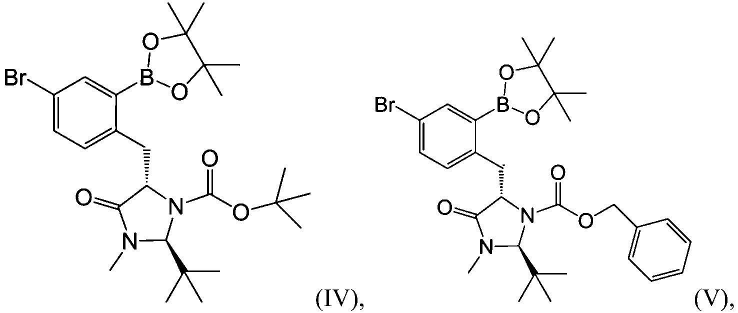

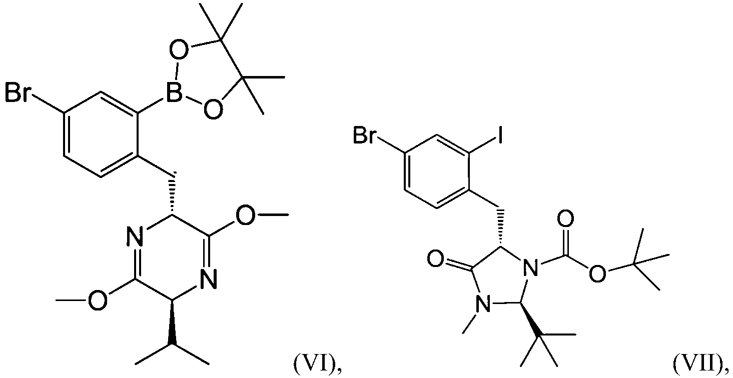

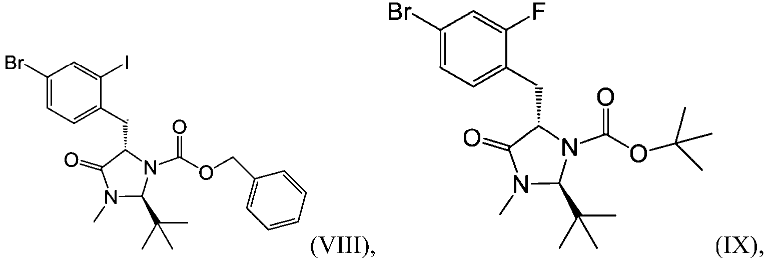

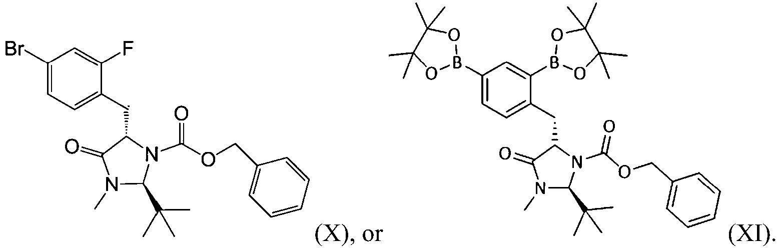

12. A system (100) for preparing a fluorine-containing pharmaceutical, **characterized in that** the system (100) comprises:
a fluorination module (1) configured to perform an ¹⁸F fluorination reaction on an aromatic ring precursor containing at least one pinacol borate to obtain an intermediate; and
a hydrolysis module (2) connected to the fluorination module (1) and configured to perform a hydrolysis reaction on the intermediate to obtain a fluorine-containing pharmaceutical product, wherein the aromatic ring precursor has the structure shown in formula (I):

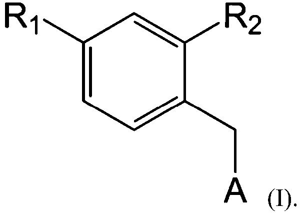

13. The system (100) of claim 12, **characterized in that** the fluorination module (1) comprises:
a fluorination reaction unit (11);
a reactant introducing unit (12) configured to introduce the aromatic ring precursor into the fluorination reaction unit (11);
a fluoride ion introducing unit (13) configured to introduce a fluoride ion into the fluorination reaction unit (11); and
a first catalyst unit (14) configured to introduce the first catalyst into the fluorination reaction unit (11),
wherein the fluorination reaction unit (11) is configured to receive the aromatic ring precursor, the fluoride ion, and the first catalyst to perform the ¹⁸F fluorination reaction.

14. The system (100) of claim 12, **characterized in that** the hydrolysis module (2) comprises:
a hydrolysis reaction unit (21);
an acid compound introducing unit (22), configured to introduce an acid compound into the hydrolysis reaction unit (21); and
a heating unit (23), configured to heat the hydrolysis reaction unit (21),
wherein the hydrolysis reaction unit (21) is configured to receive the acid compound to perform the hydrolysis reaction.

15. The system (100) of claim 12, **characterized in that** the system (100) further comprises a purification module (3) connected to the hydrolysis module (2), and the purification module (3) is configured to purify the fluorine-containing pharmaceutical product.

16. The system (100) of claim 12, **characterized in that** the intermediate comprises a first intermediate and a second intermediate, the fluorination module (1) is configured to perform the ¹⁸F fluorination reaction on the aromatic ring precursor to obtain the first intermediate, the system (100) further comprises a borylation module (4) connected between the fluorination module (1) and the hydrolysis module (2), and the borylation module (4) is configured to react the first intermediate with the at least one pinacol borate in the presence of a second catalyst to generate the second intermediate; and the hydrolysis module (2) is configured to perform the hydrolysis reaction on the second intermediate to obtain the fluorine-containing pharmaceutical product.

17. The system (100) of claim 16, **characterized in that** the borylation module (4) comprises:
a borylation reaction unit (41);
a second catalyst unit (42) configured to introduce the second catalyst into the borylation reaction unit (41); and
a mixture processing unit (43), connected to the fluorination module (1) and the borylation reaction unit (41), the mixture processing unit (43) is configured to process a mixture from the fluorination module (1) to obtain the first intermediate, and to introduce the first intermediate into the borylation reaction unit (41);
wherein the borylation reaction unit (41) is configured to receive the second catalyst and to react the first intermediate with the at least one pinacol borate in the presence of the second catalyst.
